# EUROPEAN PATENT APPLICATION

(11) **EP 3 968 439 A1**
(43) Date of publication of application: **16.03.2022**
(21) Application number: 20938023.7
(22) Date of filing: 12.11.2020
(51) Int. Cl.: H01M 10/6551

(54) **HEAT SINK**

(30) Priority: 29.05.2020 KR 20200065214
(71) Applicant: LG ENERGY SOLUTION, LTD., Seoul 07335 (KR)
(72) Inventor: JIN, Hee Jun, Daejeon 34122 (KR); CHI, Ho June, Daejeon 34122 (KR); KIM, Kyung Woo, Daejeon 34122 (KR); MOON, Jeong Oh, Daejeon 34122 (KR); PARK, Jin Yong, Daejeon 34122 (KR); PARK, Jhin Ha, Daejeon 34122 (KR)
(74) Representative: Plasseraud IP
(86) International application number: PCT/KR2020/015909
(87) International publication number: WO 2021/241820

(57) **Abstract**

The present invention provides a heatsink, which is coupled to a pack tray, on which a plurality of secondary batteries are mounted, and comprises an inlet and an outlet so that cooling water is introduced into and discharged from a chamber therein, the heatsink comprising: a dimple convexly protruding to the inside of the chamber to form a flow path of the cooling water, wherein the dimple is provided in plurality, and the plurality of dimples are spaced apart from each other, wherein the dimples are disposed so that a gap between the dimples adjacent to each other in a specific area and a gap between the dimples adjacent to each other in the other area are different from each other.

In the present invention having the above-described constituents, the gap between the dimples may vary to prevent deformation and bending in the specific direction.

## Description

### CROSS-REFERENCE TO RELATED APPLICATION

The present application claims the benefit of the priority of Korean Patent Application No. 10-2020-0065214, filed on May 29, 2020, which is hereby incorporated by reference in its entirety.

### TECHNICAL FIELD

The present invention relates to a heatsink mounted on a secondary battery module, in which a plurality of secondary batteries are mounted, or a secondary battery pack, to which a plurality of secondary battery modules are coupled, and more particularly, to a heatsink which is mounted on a secondary battery module or a secondary battery pack, has a strong structure against an external impact, and is improved in flow path of cooling water to improve cooling performance.

### BACKGROUND ART

A secondary battery has a structure in which an electrode assembly, in which a positive electrode, a separator, and a negative electrode are repeatedly stacked, and an electrolyte are embedded in a case, and is manufactured in a structure that is capable of being repeatedly chargeable and dischargeable by an electrochemical reaction between components.

A secondary battery module is configured by coupling a plurality of secondary batteries to each other and is manufactured by being mounted on a dedicated frame or case to protect each secondary battery from external impacts, heat, and vibration. A cooling device may be selectively mounted on the frame or case.

Also, a secondary battery pack is configured by coupling a plurality of secondary battery modules to each other in a form that is finally mounted on an electric vehicle or a large-capacity electrical storage device. In addition to the secondary battery module, the secondary battery pack has a structure in which a battery management system (BMS), a cooling device, and a protection and control system are additionally mounted.

The secondary battery inevitably generates heat as the electrochemical reaction occurs during the charging or discharging. The heat may interfere with the electrochemical reaction to deteriorate performance, and if heat accumulation continues, it may cause failures or malfunction of the secondary battery, and in severe cases, cause even ignition.

However, since each of the secondary battery module and the secondary battery pack has a structure in which a plurality of secondary batteries are densely installed in a narrow space, it is very important to efficiently cool the heat generated from each of the secondary battery module and the secondary battery pack.

Therefore, it is essential to mount a cooling device in the secondary battery module having a high output and a large capacity and/or the secondary battery pack in which the secondary battery is mounted.

An air-cooling type cooling device constituted by a heat dissipation plate and a cooling fan may be mounted according to a size and capacity of the cooling device, but in the case of a relatively large amount of heat, a water-cooling type cooling device that is heat-exchanged with cooling water may be mounted.

There are also various types of water-cooling type cooling devices. Among them, a heatsink type cooling device is mounted in a form in which a plurality of secondary batteries 7 are mounted on a lower portion (or an upper portion in some cases) of a pack tray 6 mounted thereon.

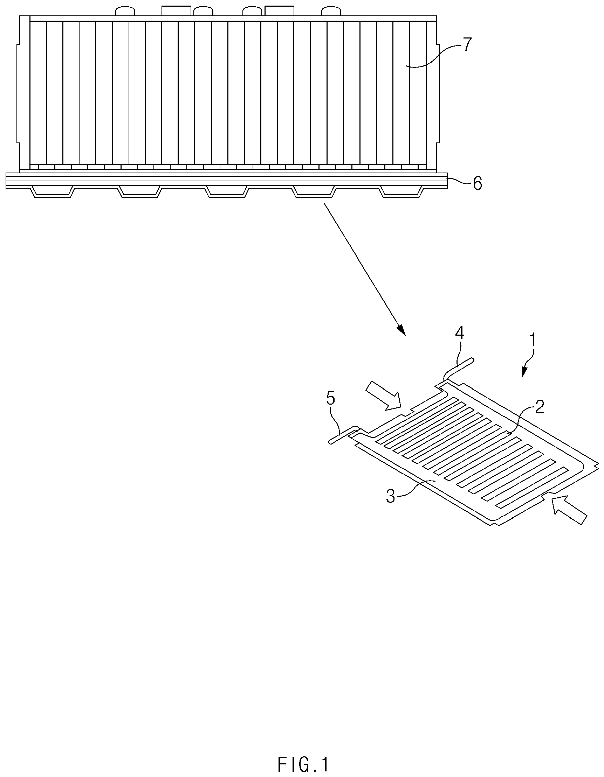

That is, as illustrated in FIG. 1 that illustrates a state, in which a conventional heatsink 1 is mounted, and a state in which, the heatsink 1 is removed, when a plurality of secondary batteries 7 are mounted above the pack tray 6, a heatsink 1 is mounted below the pack tray 6.

The heatsink 1 has a plate shape, but one surface of the heatsink 1 has a shape that is concavely recessed. Thus, when the heatsink 1 is attached to a flat surface of the pack tray 6, the heatsink 1 has a structure in which a seal space having a predetermined size is formed. The sealed space forms a chamber 3 through which cooling water flows. An inlet 4 as an inlet through which low-temperature cooling water flows and an outlet 5 as an outlet through which high-temperature cooling water that is heat-exchanged is discharged are formed at one side and the other side of the heatsink 1, respectively.

Also, a dimple 2 protrudes convexly inside the chamber 3 so that a flow path of the cooling water is provided in the chamber 3. Also, as illustrated in FIG. 1, the dimple may generally have a structure in which both sides of the dimple are symmetrical to each other, and a gap between the adjacent dimples 2 is constant so that the dimples 2 are equally heat-exchanged with the secondary batteries disposed above the pack tray 6.

However, this structure has a problem in that support force decreases in a direction in which the dimple 2 is formed when an external impact or load is applied. Particularly, when mounted on a vehicle, deformation may occur due to continuous vibration and centrifugal force generated during driving.

### DISCLOSURE OF THE INVENTION

### TECHNICAL PROBLEM

Therefore, a main object of the present invention is to provide a heatsink, which is mounted on a secondary battery module or a secondary battery pack, more efficiently prevents deformation due to a load applied in a specific direction, has more strong durability against continuous impacts and vibration, and realizes uniform heat-exchange of cooling water.

### TECHNICAL SOLUTION

The present invention for achieving the above object provides a heatsink, which is coupled to a pack tray, on which a plurality of secondary batteries are mounted, and comprises an inlet and an outlet so that cooling water is introduced into and discharged from a chamber therein, the heatsink comprising: a dimple convexly protruding to the inside of the chamber to form a flow path of the cooling water, wherein the dimple is provided in plurality, and the plurality of dimples are spaced apart from each other, wherein the dimples are disposed so that a gap between the dimples adjacent to each other in a specific area and a gap between the dimples adjacent to each other in the other area are different from each other.

The heatsink may have a rectangular plate shape having two long sides, each of which has a relatively long length, and two short sides, each of which has a relatively short length, wherein the inlet and the outlet may be disposed at opposite ends of one short side of the short sides, each of which has the relatively short length, respectively.

As the dimples are disposed closer to the inlet and the outlet, the dimples may be disposed at higher density, and as the dimples are further away from the inlet and the outlet, the dimples may be disposed at lower density.

The dimples may be disposed closer to the long side as the dimples are closer to the inlet and outlet along a longitudinal direction of the long side and be disposed farther away from the long side as the dimples are farther away from the inlet and outlet.

The dimple may be formed in a circular shape, in particular, circular shapes having the same diameter.

A through-part having a through-hole passing through the inside of the chamber along a thickness direction may be formed in the heatsink. The through-part may comprise a support part that protrudes from a surface of the heatsink and is in close contact with one surface of the pack tray when the heatsink is coupled to the one side of the pack tray, wherein the through-hole may be defined in the support part.

The through-part may be disposed on a virtual line connecting intermediate points of both the short sides to each other and is provided in plurality, wherein the plurality of through-parts may be spaced apart from each other along a longitudinal direction of the long side.

Each of the inlet and the outlet may have a shape in which one of surfaces that are opened to the chamber is formed as an inclined surface to increase in cross-sectional area toward a direction closer to the chamber.

### ADVANTAGEOUS EFFECTS

In the present invention having the above-described constituents, the gap between the dimples may vary to prevent the deformation and the bending in the specific direction.

The dimples may be disposed at the higher density as the dimples are closer to the inlet and outlet, and the dimples may be disposed at the lower density as the dimples are further away from the inlet and outlet. Therefore, as the flow path of the cooling water becomes simpler as the gap from the inlet and the outlet is farther away, the flow distribution and the heat exchange may be evenly performed over the heatsink.

The dimples may be disposed closer to the long side as the dimples are closer to the inlet and outlet along the longitudinal direction of the long side, and the dimples may be disposed farther away from the long side as the dimples are farther away from the inlet and outlet. Therefore, as the gap from the inlet and outlet increases, the cross-sectional area of the flow path may increase to quickly reach the short side opposite to the short side at which the inlet and outlet are disposed.

The plurality of dimples may be formed in the circular shapes having the same diameter. Therefore, when the cooling water flows, the formation of the vortex due to the irregular flow of the cooling water may be suppressed or minimized.

The through-part having the through-hole passing through the inside of the chamber in the thickness direction may be formed in the heatsink. Accordingly, the coupling device of the heatsink or the wiring connected from the secondary battery may pass through the through-hole. When the coupling device for fixing the heatsink to the pack tray is coupled through the through-hole, the heatsink may be more strongly coupled because the coupling force is generated at the intermediate position of the heatsink.

Each of the inlet and the outlet may have the shape in which one of the surfaces that are opened to the chamber is formed as the inclined surface to increase in cross-sectional area toward the direction closer to the chamber, thereby allowing the cooling water to be quickly introduced and discharged.

### BRIEF DESCRIPTION OF THE DRAWINGS

FIG. 1 is a view illustrating a state in which a conventional heatsink is coupled to a lower portion of a pack tray of a secondary battery module and a state in which the heatsink is removed.
FIG. 2 is a view illustrating a state in which a heatsink according to the present invention is coupled to a lower portion of a pack tray of a secondary battery module and a state in which the heatsink is removed.
FIG. 3 is a plan view of the heatsink according to the present invention.
FIG. 4 is an enlarged view of a portion A and a portion B in FIG. 3.
FIG. 5 is an enlarged view illustrating a portion of the plan view of the heatsink according to the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly illustrate the present invention, parts that are not related to the description are omitted, and the same or similar components are denoted by the same reference numerals throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention for achieving the above object relates to a heatsink in which, when coupled to one surface of a pack tray 6 on which a plurality of secondary batteries 7 are mounted, the one surface may be closed, and an inlet and an outlet are provided to allow cooling water to be introduced into and discharged from a chamber therein. Hereinafter, a preferred embodiment of the present invention will be described in more detail with reference to the accompanying drawings.

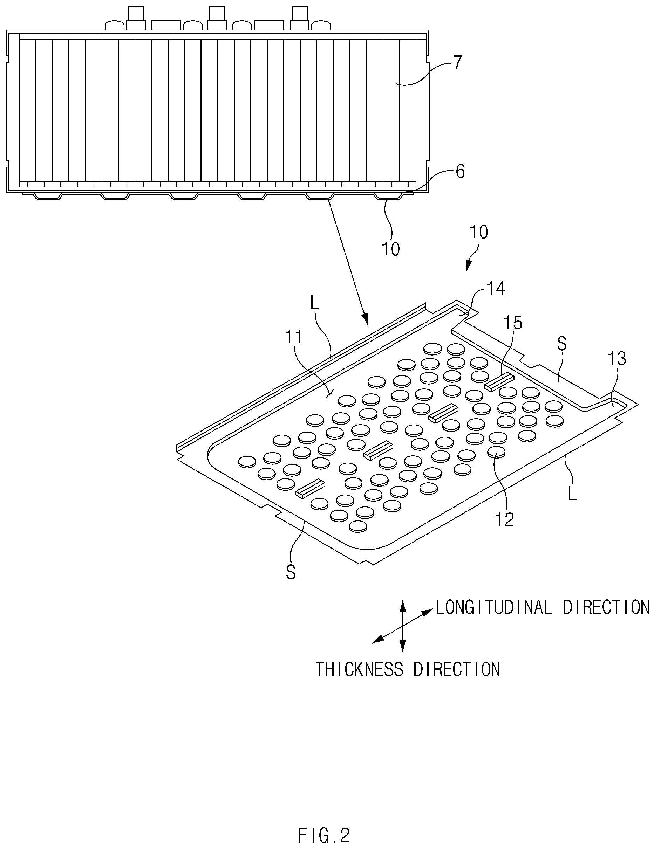

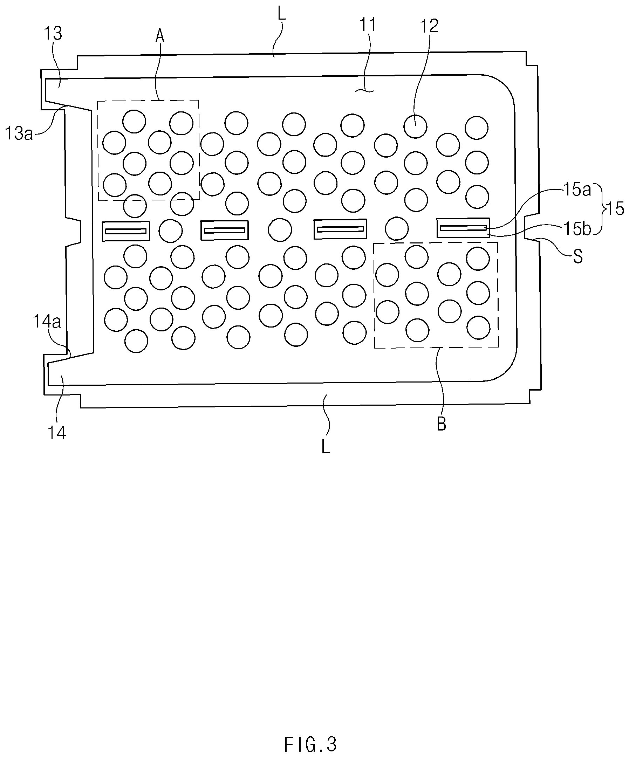

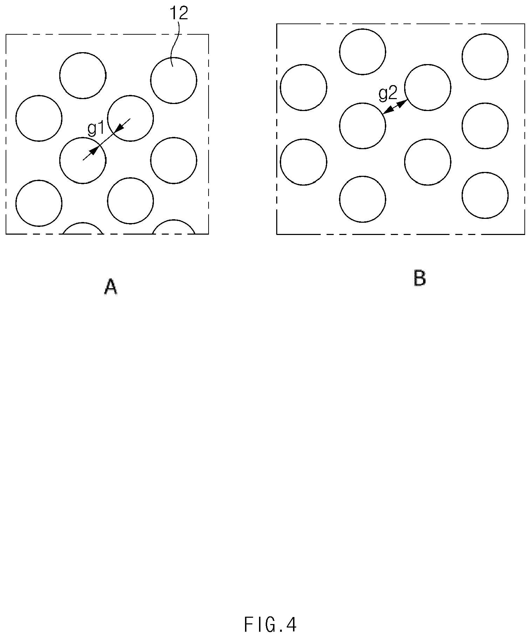

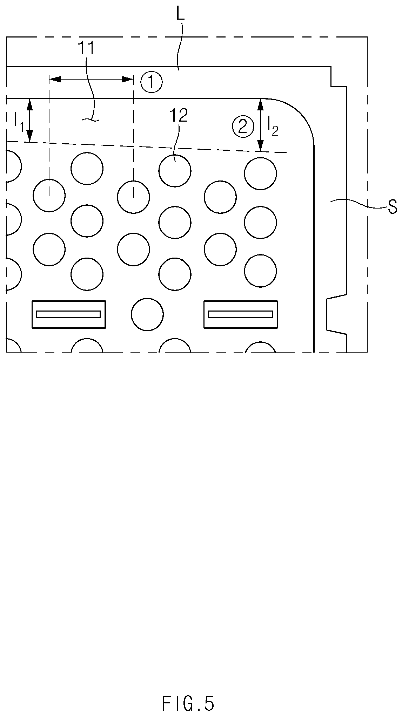

FIG. 2 is a view illustrating a state in which a heatsink according to the present invention is coupled to a lower portion of a pack tray of a secondary battery module and a state in which the heatsink is removed, and FIG. 3 is a plan view of the heatsink according to the present invention. FIG. 4 is an enlarged view of a portion A and a portion B in FIG. 3, and FIG. 5 is an enlarged view illustrating a portion of the plan view of the heatsink according to the present invention.

Referring to the accompanying drawings, a heatsink 10 of the present invention has a space in which cooling water is circulated. Here, the heatsink 10 has a plate shape that is concavely recessed toward one surface so that when coupled to the one surface of the pack tray, the one surface is closed, or so that the heatsink is coupled to a separate flat plate so as to be mounted between secondary batteries and the tray pack.

That is, according to the present invention, the heatsink 10 may be coupled to the pack tray 6. Particularly, the heatsink 10 may be coupled to the pack tray 6 in a state in which an opening surface is coupled to a bottom surface of the pack tray 6 to close the opening surface, or the opening surface is closed through a separate flat plate. The heatsink 10 may be coupled to the pack tray and the separate flat plate through brazing or an adhesive.

Thus, one surface of the heatsink 10 protrudes convexly, and the other surface of the heatsink 10 is closed by the bottom surface of the separate flat plate or the pack tray to form a chamber 11 having a space through which cooling water is circulated. Also, an inlet 13 through which the cooling water is introduced and an outlet 14 through which the cooling water is discharged are formed in the heatsink 10 to communicate with the chamber 11.

Each of the inlet 13 and the outlet 14 is provided in the form of a hole or groove through which the cooling water is introduced into or discharged from the heatsink 10 and is connected to an external cooling device for supplying and recovering the cooling water through a hose or pipe.

In the present invention, the heatsink 10 has a rectangular plate shape having two long sides L, each of which has a relatively long length, and two short sides S, each of which has a relatively short length, and the inlet 13 and the outlet 14 are respectively disposed at opposite ends of one short side S of the short sides S, each of which has the relatively short length.

Also, a plurality of dimples 12 convexly protrude from one surface of the heatsink 10 so as to be disposed inside the chamber 11.

The dimples 12 block a flow of the cooling water in the chamber 11 to form a flow path of the cooling water.

The dimples 12 are formed in circular shapes, in particularly, are formed in circular shapes having the same diameter. Also, the dimples 12 are disposed to be spaced a gap from each other. Here, the dimples 12 may be disposed so that a gap g1 between the dimples 12 adjacent to each other in a specific area and a gap g2 between the dimples 12 adjacent to each other in the other area are different from each other.

As the dimples 12 are disposed closer to the inlet 13 and the outlet 14, the dimples 12 are disposed at higher density. As the dimples 12 are further away from the inlet 13 and the outlet 14, the dimples 12 are disposed at lower density.

That is, as illustrated in FIG. 4 in which points A and B of FIG. 3 are illustrated to be enlarged, the gap g1 between the dimples 12 that are disposed close to the inlet 13 and the outlet 14 is relatively small, and the gap g2 between the dimples 12 that are disposed far from the inlet 13 and the outlet 14 is relatively large. For reference, although the dimples 12 are illustrated to have the circle shapes having the same size, a configuration in which the dimples 12 have different diameters to form different gaps therebetween is possible. Also, each of the dimples 12 may have combinations of various shapes and various sizes such as an oval shape, a polygonal shape, an atypical shape, and the like in addition to the circular shape. The combinations may be determined in consideration of the bending stiffness of the heatsink 10 and the flow of the cooling water.

Furthermore, as illustrated in FIG. 5, the dimple 12 is disposed closer to the long side L as being closer to the inlet 13 and the outlet 14 along the longitudinal direction of the long side L, and the dimple 12 is disposed farther away from the inlet 13 and the outlet 14 as being farther away from the long side L. That is, a length in a direction indicated by ② gradually increases from l₁ to l₂ as it goes to a right side based on a direction indicated by ①.

Thus, when the cooling water is discharged from the inlet 13, a cross-sectional area in which the cooling water is flowable gradually increases as being farther away from the inlet 13.

A fixing device for fixing various kinds of cables and the heatsink 10 as well as the heatsink 10 is mounted on the secondary battery module or pack. Thus, in the heatsink 10 according to the present invention, a through-hole 15a is formed along a thickness direction to pass through the heatsink 10 so that accessories such as the cables are mounted by passing through the heatsink 10.

A through-part 15 in which the through-hole 15a is formed has a support part 15b that protrudes from a surface of the heatsink 10 and is in close contact with one surface of the pack tray when the heatsink 10 is coupled to the one side of the pack tray, and the through-hole 15a is formed in the support part 15b.

The support part 15b protrudes from the surface of the heatsink 10 inside the chamber 11. Here, the support part 15b is formed at a height at which a protruding end is in close contact with a bottom surface or a flat plate of the pack tray that closes the heatsink 10.

For reference, a sealing material such as a rubber gasket (not shown) may be added to the support part 15b to prevent the cooling water from leaking when being in close contact with the bottom surface or the flat plate of the pack tray.

The through-part 15 is disposed on a virtual line connecting intermediate points of both the short sides S to each other, and a plurality of through-parts 15 are spaced apart from each other along the longitudinal direction of the long side L. That is, as illustrated in the drawings, the through-parts 15 may be disposed along a center parallel to the long sides in intermediate points between the two long sides L.

Also, each of the inlet 13 and the outlet 14 has a shape in which one of the surfaces that are opened to the chamber 11 is formed as an inclined surface to increase in cross-sectional area in a direction closer to the chamber.

In the present invention having the above-described constituents, the gap between the dimples 12 may vary to prevent the deformation and the bending in the specific direction.

As the dimples 12 are disposed closer to the inlet 13 and the outlet 14, the dimples 12 are disposed at the higher density. As the dimples 12 are further away from the inlet 13 and the outlet 14, the dimples 12 are disposed at the lower density. Therefore, as the flow path of the cooling water becomes simpler as the gap from the inlet 13 and the outlet 14 is farther away, the flow distribution and the heat exchange may be evenly performed over the heatsink 10.

The dimples 12 may be disposed closer to the long side L as the dimples 12 are closer to the inlet 13 and outlet 14 along the longitudinal direction of the long side L, and the dimples 12 may be disposed farther away from the long side L as the dimples are farther away from the inlet 13 and outlet 14. Therefore, as the gap from the inlet 13 and outlet 14 increases, the cross-sectional area of the flow path may increase to quickly reach the short side S opposite to the short side S at which the inlet 13 and outlet 14 are disposed.

The plurality of dimples 12 may be formed in the circular shapes having the same diameter. Therefore, when the cooling water flows, the formation of the vortex due to the irregular flow of the cooling water may be suppressed or minimized.

The through-part having the through-hole 15a passing through the inside of the chamber along the thickness direction is formed in the heatsink 10. Accordingly, the coupling device of the heatsink 10 or the wiring connected from the secondary battery may pass through the through-hole 15a. When the coupling device for fixing the heatsink 10 to the pack tray is coupled through the through-hole 15a, the heatsink 10 may be more strongly coupled because the coupling force is generated at the intermediate position of the heatsink 10.

Each of the inlet and the outlet may have the shape in which one of the surfaces that are opened to the chamber is formed as each of the inclined surfaces 13a and 14a to increase in cross-sectional area toward the direction closer to the chamber, thereby allowing the cooling water to be quickly introduced and discharged.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

- 10:: Heatsink
- 11:: Chamber
- 12:: Dimple
- 13:: Inlet
- 14:: Outlet
- 15:: Through-part

## Claims

1. A heatsink, which is coupled to a pack tray, on which a plurality of secondary batteries are mounted, and comprises an inlet and an outlet so that cooling water is introduced into and discharged from a chamber therein, the heatsink comprising:
a dimple convexly protruding to the inside of the chamber to form a flow path of the cooling water,
wherein the dimple is provided in plurality, and the plurality of dimples are spaced apart from each other,
wherein the dimples are disposed so that a gap between the dimples adjacent to each other in a specific area and a gap between the dimples adjacent to each other in the other area are different from each other.

2. The heatsink of claim 1, wherein the heatsink has a rectangular plate shape having two long sides, each of which has a relatively long length, and two short sides, each of which has a relatively short length,
wherein the inlet and the outlet are disposed at opposite ends of one short side of the short sides, each of which has the relatively short length, respectively.

3. The heatsink of claim 2, wherein, as the dimples are disposed closer to the inlet and the outlet, the dimples are disposed at higher density, and as the dimples are further away from the inlet and the outlet, the dimples are disposed at lower density.

4. The heatsink of claim 3, wherein the dimples are disposed closer to the long side as the dimples are closer to the inlet and outlet along a longitudinal direction of the long side and are disposed farther away from the long side as the dimples are farther away from the inlet and outlet.

5. The heatsink of claim 1, wherein the dimple is formed in a circular shape.

6. The heatsink of claim 5, wherein the dimples are formed in circular shapes having the same diameter.

7. The heatsink of claim 2, wherein a through-part having a through-hole passing through the inside of the chamber along a thickness direction is formed in the heatsink.

8. The heatsink of claim 7, wherein the through-part comprises a support part that protrudes from a surface of the heatsink and is in close contact with one surface of the pack tray when the heatsink is coupled to the one side of the pack tray,
wherein the through-hole is defined in the support part.

9. The heatsink of claim 8, wherein the through-part is disposed on a virtual line connecting intermediate points of both the short sides to each other and is provided in plurality,
wherein the plurality of through-parts are spaced apart from each other along a longitudinal direction of the long side.

10. The heatsink of any one of claims 1 to 9, wherein each of the inlet and the outlet has a shape in which one of surfaces that are opened to the chamber is formed as an inclined surface to increase in cross-sectional area toward a direction closer to the chamber.
